(19) **Europäisches Patentamt / European Patent Office / Office européen des brevets**

(11) **EP 2 469 368 A2**

(12) **EUROPEAN PATENT APPLICATION**

(43) Date of publication:
**27.06.2012 Bulletin 2012/26**

(21) Application number: **11193655.5**

(22) Date of filing: **15.12.2011**

(51) Int Cl.:
$G05D\ 7/00$ (2006.01)  $\qquad$ $B01D\ 37/04$ (2006.01)
$F02M\ 37/22$ (2006.01)  $\qquad$ $G08B\ 29/00$ (2006.01)
$G01F\ 1/88$ (2006.01)  $\qquad$ $G01F\ 1/34$ (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.12.2010 US 978717**

(71) Applicant: **GE Aviation Systems LLC
Grand Rapids, MI 49512-1991 (US)**

(72) Inventor: **Wilson, Jonathan Paul
Cincinnati, OH Ohio 45215 (US)**

(74) Representative: **Williams, Andrew Richard
Global Patent Operation-Europe
GE International Inc
15 John Adam Street
London WC2N 6LU (GB)**

(54) **Method and system for determining a component's resistance to flow**

(57)  A flow monitoring system (138) includes one or more sensors (146,148) configured to generate a signals representative of a pressure of a fluid at a location upstream of a component, a pressure of the fluid at a location downstream of the component, a temperature of the fluid at the component, and a measurement of the flow through the component and a processor (65) programmed to determine a value indicative of a density of the fluid at the component using the temperature, determine a value indicative of an equivalent resistance to flow at the component using the generated signals and the determined density, and output the determined equivalent resistance to flow value.

FIG. 1

Description

## BACKGROUND OF THE INVENTION

The field of the invention relates generally to fluid system component flow analysis, and more specifically, to a method and system for modeling fluid system components.

At least some known methods for fluid system component analysis rely on delta pressure to predict future outcomes as well as current component, system status. An application specific use of the algorithm is useful for monitoring the status of a fuel filter component of a fuel system. These methods for monitoring fuel filter also produce a status alert if a differential pressure (dP) at the fuel filter is approaching a level that has been determined to be too high, or approaching a level that would indicate restricted flow. A low dP is typical in a "good" range and is expected for normal operation. However, an example where a low dP may indicate a severe situation is for that of a collapsed or disintegrating filter. This can be, and typically is missed diagnosed with the traditional methods in use.

There have been several attempts to resolve the issue such as using a moving averages technique or including other measures into the logic to turn off or ignore differential pressure alarms during known high flow conditions. Because the sum of the delta pressures through an equivalent circuit is equal to the total pump pressure, isolation of clogs are not known.

## BRIEF DESCRIPTION OF THE INVENTION

In one embodiment, a flow monitoring system includes one or more sensors configured to generate a set of signals representative of a pressure of a fluid at a location upstream of a component, a pressure of the fluid at a location downstream of the component; and a temperature of the fluid at the component and a processor programmed to determine variation in the density of the fluid at the component using the temperature, determine a value indicative of an equivalent resistance to flow at the component using the generated signals and the determined density, and output the determined equivalent resistance to flow value.

In another embodiment, a method of monitoring component integrity includes receiving a value indicative of a pressure of a fluid at a location upstream of a component, receiving a value indicative of a pressure of the fluid at a location downstream of the component, the flow through the component, receiving a value indicative of a temperature of the fluid at the component, determining a value indicative of a density of the fluid at the component using the temperature, determining a value indicative of an equivalent resistance to flow at the component using the received upstream pressure, the received downstream pressure, and the determined density, the flow through the component, and outputting the determined equivalent resistance to flow value.

In yet another embodiment, a flow monitoring system includes a plurality of sensors configured to generate a set of signals representative of a pressure of a fluid at a location upstream of a component, a pressure of the fluid at a location downstream of the component, the flow through the component; and a temperature of the fluid at the component and a processor programmed to determine a value indicative of a density of the fluid at the component using the temperature and determine a value indicative of an equivalent resistance to flow at the component using the generated signals and the determined density.

## BRIEF DESCRIPTION OF THE DRAWINGS

**FIGS. 1-2** show exemplary embodiments of the method and system described herein.

**FIG. 1** is a schematic diagram of a gas turbine engine fuel system in accordance with an exemplary embodiment of the present invention; and

**FIG. 2** is a data flow diagram for the fuel flow monitoring system shown in FIG. 1 in accordance with an exemplary embodiment of the present invention.

## DETAILED DESCRIPTION OF THE INVENTION

The following detailed description illustrates embodiments of the invention by way of example and not by way of limitation. It is contemplated that the invention has general application to component flow analysis and modeling in industrial, commercial, and residential applications.

As used herein, an element or step recited in the singular and preceded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

Embodiments of the present invention include an algorithm that defines the physical properties of a fuel system component, has the flexibility to be applied to the entire fuel system for condition based monitoring, isolation of system and/or component impending failures, and failures, while reducing "false" alerts common with current methods.

In one embodiment, the algorithm assesses the fuel filter dP through a corrected dP function or fuel filter resistance value. Large changes in fuel filter resistance are due to fuel filter contamination over time, a collapsed filter condition, abnormally high fuel density or a clog.

The algorithm is broken out into two major subsystems: input logic (input parameter validation) and the resistance function. The inputs include fuel filter dP, AB fuel flow, main fuel flow, fuel temperature, core speed, sysfail for each input parameter, and confidence levels for each input parameter.

The output includes a fuel filter resistance to flow. Adjustments to the algorithm include fuel density at STD day temp (6.73 lbf/gal), acceptable controls (AS1) confidence thresholds (.2 < confx =< 2), a minimum fuel flow at a minimum core speed requirement to run algorithm (60%), and a module enable/disable.

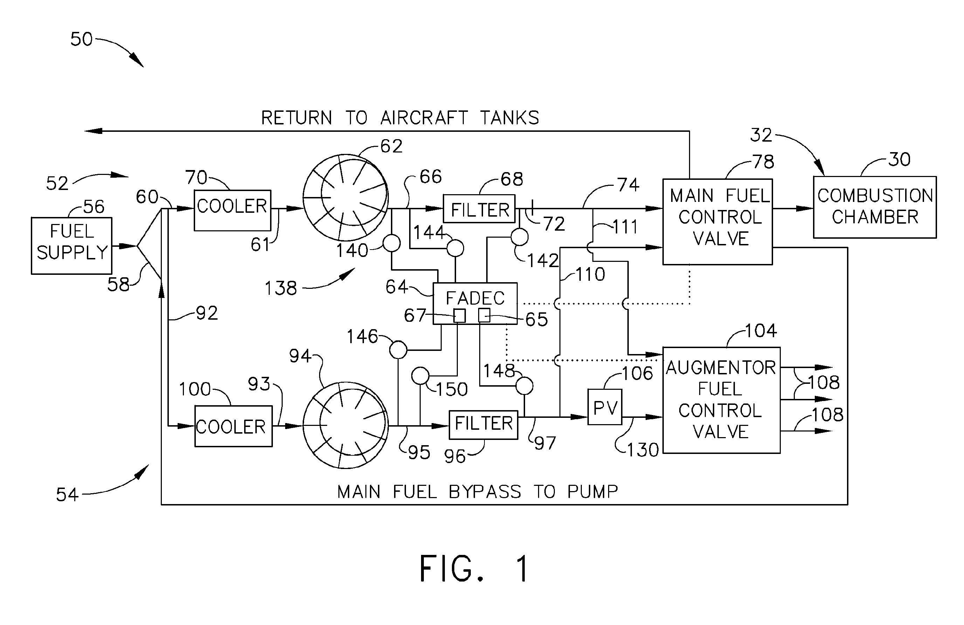

**FIG. 1** is a schematic diagram of a gas turbine engine fuel system 50 in accordance with an exemplary embodiment of the present invention. In the exemplary embodiment, fuel system 50 includes a main fuel system 52 and an augmentor fuel system 54. A fuel supply 56 is provided in fuel tanks (not shown) carried by the aircraft, and a boost pump 58 is provided to increase the pressure of the fuel drawn from fuel supply 56 before the fuel is supplied to either of the engine high pressure fuel pumps. Fuel flows from boost pump 58 to main fuel system 52 through a fuel conduit 60 that extends to the inlet of a main fuel-oil cooler 70 and then through conduit 61 to main fuel pump 62.

Pump 62 is driven by a power-take-off arrangement (not shown) from the main engine drive shaft through a suitable gearbox to provide to main fuel pump 62 rotary power at a desired torque level and shaft speed. Operation of main fuel pump 62 is monitored and controlled by an electronic engine control 64, such as a full authority digital electronic control (FADEC) which receives input signals from the engine that are representative of various engine operating parameters, and also input signals from the airframe, such as engine power demand. Engine control 64 includes dual channels to provide redundant engine control loops that receive dual sensed parameter inputs to allow dual outputs. A processor 65 communicatively coupled to a memory 67 is programmed to perform the functions described herein. Although described as being a part of FADEC 64, processor 65 may be part of another system or a standalone system.

Fuel from the outlet of main fuel pump 62 proceeds through a conduit 66 to main fuel filter with emergency bypass system 68, and then through a check valve 72 and via conduit 74 to the main engine fuel control valve 78. Main engine fuel control valve 78 regulates the rate of fuel flow to fuel nozzles 32 of combustion chamber 30.

Thrust augmentor fuel system 54 is a fuel flow loop that is distinct from that associated with main engine fuel system 52. Augmentor fuel system 54 receives fuel through conduit 92 from boost pump 58 and conveys the fuel to the inlet of a fuel-oil cooler 100 and then through conduit 93 to the inlet of an augmentor fuel pump 94. Augmentor fuel pump 94 is also driven by a power-take-off arrangement that is operatively connected with the engine drive shaft through a suitable drive system, and it provides pressurized fuel through conduit 95 to a fuel filter 96 and then through conduit 97 to a servo operated pressurizing valve 106.

Conduit 111 extends from conduit 74 in main fuel system 52 to augmentor fuel control valve 104, to allow restricted operation of the augmentor by utilizing pressurized fuel from main fuel pump 62, should the output from augmentor fuel pump 94 be inadequate.

Fuel flows from pressurizing valve 106 through a conduit 130 to an augmentor fuel control valve 104 that distributes the fuel to the several fuel introduction zones 108 typically provided in a thrust augmentation system.

Augmentor fuel pump 94 and augmentor pressurizing valve 106 are each controlled by electronic engine control 64. Input parameters to the electronic engine control for those control functions include RPM, fuel pressure, pump stroke, and engine power demand. Augmentor fuel control valve 104 is also controlled by electronic engine control 64, and the input parameters for those functions traditionally include power lever angle, augmentor fuel flow demand, main combustion chamber pressure, engine inlet temperature, exhaust nozzle throat area, exhaust nozzle outlet area, exhaust nozzle throat pressure, and ambient pressure.

Fuel system 50 also includes provisions for supplying backup fuel flow from augmentor fuel pump 94 to main fuel system 52 should main fuel pump 62 fail. Branch conduit 110 conveys pressurized fuel from augmentor fuel pump 94 to main fuel control valve 78. Thus, should main fuel pump 62 fail, the engine can continue to operate, but under restricted-augmentation conditions, by diverting fuel flow from the outlet of augmentor fuel pump 94 to main fuel control valve 78.

Fuel system 50 also includes instruments that facilitate operation of the engines and other fuel system components. Fuel system 50 includes a fuel flow monitoring system 138 including a pressure sensor 140 on an inlet side of main fuel filter 68, a pressure sensor 142 on an outlet side of main fuel filter 68, a temperature sensor 144 at main fuel filter 68. Fuel flow monitoring system 138 includes a pressure sensor 146 on an inlet side of augmentor fuel filter 96, a pressure sensor 148 on an outlet side of augmentor fuel filter 96, and a temperature sensor 150 at augmentor fuel filter 96.

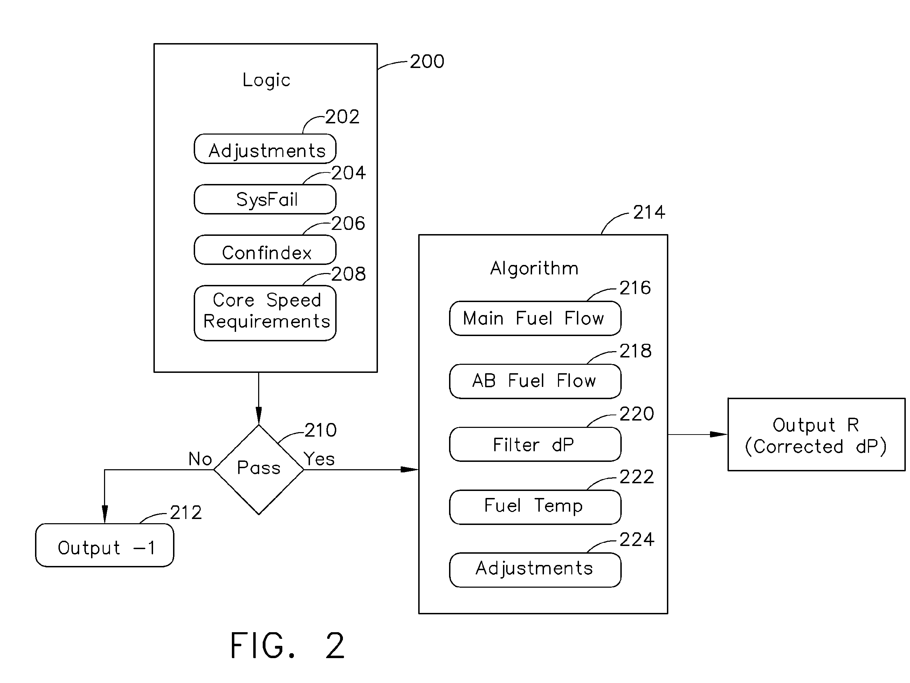

**FIG. 2** is a data flow diagram for fuel flow monitoring system 138 (shown in FIG.1) in accordance with an exemplary embodiment of the present invention. In the exemplary embodiment, a logic block 200 includes an adjustments module 202 that determines adjustments to raw input signals from sensors in fuel system 50 such as scaling adjustments. A sysfail module 204 ensures inputs from the sensors are valid, for example, are not in a failed range. A confindex module 206 verifies a confidence level of the inputs exceeds a predetermined threshold. A core speed requirements verifies a core speed 208 exceeds a predetermined threshold, such as, for example, 60% of rated speed. A normal output for the equivalent resistance to flow value is a positive value. If the input parameters do not meet the test criteria 210 of logic block 200, a -1 is output 212 indicating a failure that makes the equivalent resistance to flow value unreliable.

An algorithm 214 of equivalent resistance to flow includes measurements of main fuel flow 216, afterburner flow 218, a differential pressure for each fuel filter 220, a fuel temperature 222, and adjustments 224, such as, but not limited to, a fuel density at STD day temp, acceptable controls (AS 1) confidence thresholds (.2 < confx =< 2), a minimum fuel flow at a minimum core speed requirement to run algorithm (60%), and a module enable/disable. An output is generated and displayed to an operator or transmitted for further processing.

Algorithm 214 assesses changes in the resistance to flow for fuel system components, for example, in the exemplary embodiment, for a fuel filter. Filter resistance increases with increases in total mission times as a function of debris mass per gal of fuel. During a mission, filter resistance will appear relatively constant regardless of fuel flow or dP. Sudden increases in resistance may indicate clogging, an increase in fuel density (temperature dependent), while sudden decreases may indicate a collapsed filter. Valid outputs will be positive values. In the event of invalid input parameters or core engine speed (N2) < 60% output will be a "weighted quality index", -1. The algorithms transfer function relies on pressure differential and fluid flow instrumentation, as well as fuel temperature at the component level. The transfer function seeks out the "equivalent resistance to flow" between two points of a pair of pressure measurements. Multiplying the ratio of the psid to fuel flow by an applicable unit conversion constant required for dimensional analysis and unit transfer, combined with the fuel density as a function of the local fuel temperature allows direct resistance to flow measurements.

This algorithm has a technical advantage in that it can be applied anywhere in the fuel system where two pressures are measured and a flow is known. It isolates a clog by implementing a fuel system to direct current (DC) circuit characteristic equation. For each location of isolation, the resistance at that location is measured. Each isolation point acts as a variable resistor in a DC circuit, and as the flow is restricted due to clogging, resistance will in crease and be monitored. In the case of a leak, or loss of a filter due to collapse, the resistance would drop and isolate the condition at that point, regardless of upstream or downstream conditions.

The resistance of a component will remain a constant regardless of flow and pressure readings, unless some physical change in the component takes place. At the same time, pressure readings across a component will vary with flow through the component, making both values, moving targets of a normal system. For example, during AB operations, fuel flows are greatly increased causing pressure differentials that would normally signal an event, when in fact the system is working nominally.

An equation that may be used in the exemplary embodiment is:

$$R_F = \frac{\Delta P_F}{\rho_F{}^2 * V_F} * s$$, where $R_F$ represents the resistance to flow

and where:

$$\Delta P_F\left(\frac{lbf}{in^2}\right),$$ represents the differential pressure across the component

$$\rho_F\left(\frac{lbm}{in^3}\right) = \rho_{F15}\left(\frac{lbf}{gal}\right) * \frac{a}{b*c}\left[1 + \lambda\left(T_{F-15}\right)\right]^{-1},$$ represents the fuel density in lbm/in³ (local variable)

$$\frac{V_F\left(in^3\right)}{s} = WF\left(\frac{lbf}{hr}\right) * \frac{b}{a*d*\rho_F},$$ represents the total (Main, AB, Bypass, leakage) pph to in³/s fuel flow conversion (local variable)

$$T_{F*C} = \frac{5}{9}T_{ISM\_TbspSel} - 273.15,$$ represents the temperature of the fuel in °C (local variable and global variable ISMTbspSEL

$$\lambda = 9.99*10^{-4}\left(\frac{L^3}{{}^\circ C}\right)$$, volume correction due to temperature variation (local variable)

$$\rho_{F15}\left(\frac{lbf}{gal}\right)$$, density of fuel at 15°C. (JP-8=6.69 ppg) (local variable)

$$a = 7.48\left(\frac{gal}{ft^3}\right)$$, (local variable)

$$b = 1728\left(\frac{in^3}{ft^3}\right)$$, (local variable)

$$c = 32\left(\frac{ft}{s^2}\right)$$, (local variable) and

$$d = 3600\left(\frac{s}{hr}\right)$$, (local variable).

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processor 65, including RAM memory, ROM memory, EPROM memory, EEPROM memory, and non-volatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is for assessing changes in the resistance to flow for fuel system components. Any such resulting program, having computer-readable code means, may be embodied or provided within one or more computer-readable media, thereby making a computer program product, i.e., an article of manufacture, according to the discussed embodiments of the disclosure. The computer-readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of assesses changes in the resistance to flow for fuel system components provides a cost-effective and reliable means for reducing false alarms for components that are operating normally. More specifically, the method and system described herein facilitate differentiating a high filter dP due to a clogged filter from a high dP due to increased fuel flow. As a result, the method and system described herein facilitate operation of gas turbine engines in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are indicated in the following clauses:

1. A flow monitoring system comprising:

   one or more sensors configured to generate a signals representative of a pressure of a fluid at a location upstream of a component, a pressure of the fluid at a location downstream of the component;

a temperature of the fluid at the component; and

a measurement of the flow through the component and a processor programmed to:

determine a value indicative of a density of the fluid at the component using the temperature;

determine a value indicative of an equivalent resistance to flow at the component using the generated signals and the determined density; and

output the determined equivalent resistance to flow value.

2. A system in accordance with Clause 1, wherein said one or more sensors comprise at least one of a pressure sensor configured to generate a signal representative of a pressure upstream of the component, a pressure sensor configured to generate a signal representative of a pressure downstream of the component, and a temperature sensor configured to generate a signal representative of a temperature at the component.

3. A system in accordance with Clause 1, wherein said one or more sensors comprise at least one of a virtual sensor configured to generate a signal representative of a pressure upstream of the component, a virtual sensor configured to generate a signal representative of a pressure downstream of the component, and a virtual sensor configured to generate a signal representative of a temperature at the component.

4. A system in accordance with Clause 1, wherein said processor is further programmed to determine the value indicative of the equivalent resistance to flow using a ratio of the received upstream pressure and the received downstream pressure.

5. A system in accordance with Clause 1, wherein said processor is further programmed to determine a quality index representing a quality of the received values.

6. A system in accordance with Clause 5, wherein said processor is further programmed to indicate an invalid output when the quality index indicates at least one of the received values is invalid.

7. A system in accordance with Clause 1, wherein said processor is further programmed to determine a blockage of a flow path of the fluid when the determined equivalent resistance to flow value increases above a predetermined threshold.

8. A system in accordance with Clause 1, wherein said processor is further programmed to determine a failed component element when the determined equivalent resistance to flow value decreases below a predetermined threshold.

9. A method of monitoring component integrity comprising:

receiving a value indicative of a pressure of a fluid at a location upstream of a component;

receiving a value indicative of a pressure of the fluid at a location downstream of the component;

receiving a value indicative of a temperature of the fluid at the component;

determining a value indicative of a density of the fluid at the component using the temperature;

determining a value indicative of a flow of the fluid through the component;

determining a value indicative of an equivalent resistance to flow at the component using the received upstream pressure, the received downstream pressure, received flow through the component, and the determined density; and

outputting the determined equivalent resistance to flow value.

10. A method in accordance with Clause 9, wherein receiving a value comprises receiving a value indicative of at least one of pressure, flow and temperature that is directly measured by an associated sensor.

11. A method in accordance with Clause 9, wherein receiving a value comprises receiving a value indicative of at least one of pressure, flow and temperature that is inferred from other known values.

12. A method in accordance with Clause 9, wherein determining a value indicative of an equivalent resistance to flow comprises determining a value indicative of an equivalent resistance to flow using a ratio of the received upstream pressure and the received downstream pressure.

13. A method in accordance with Clause 9, further comprising determining a quality index representing a quality of the received values.

14. A method in accordance with Clause 13, further comprising indicating an invalid output when the quality index indicates at least one of the received values is invalid.

15. A method in accordance with Clause 9, further comprising determining a blockage of a flow path of the fluid when the determined equivalent resistance to flow value increases above a predetermined threshold.

16. A method in accordance with Clause 9, further comprising determining a failed component element when the determined equivalent resistance to flow value decreases below a predetermined threshold.

17. A method in accordance with Clause 9, wherein determining a value indicative of an equivalent resistance to flow comprises determining a value indicative of an equivalent resistance to flow using:

$$R_F = \frac{\Delta P_F}{\rho_F{}^2 * V_F} * s$$, where $R_F$ represents the resistance to flow

and where:

$\Delta P_F \left( \frac{lbf}{in^2} \right)$, represents the differential pressure across the component

$\rho_F \left( \frac{lbm}{in^3} \right) = \rho_{F15} \left( \frac{lbf}{gal} \right) * \frac{a}{b*c} \left[ 1 + \lambda \left( T_{F-15} \right) \right]^{-1}$; represents the fuel density in lbm/in$^3$ (local variable)

$\frac{V_F \left( in^3 \right)}{s} = WF \left( \frac{lbf}{hr} \right) * \frac{b}{a*d*\rho_F}$, represents the total (Main, AB, Bypass, leakage) pph to in$^3$/s fuel flow conversion (local variable)

$T_{F*C} = \frac{5}{9} T_{ISM\_TbspSel} - 273.15$, represents the temperature of the fuel in °C (local variable and global variable ISMTbspSEL

$\lambda = 9.99 * 10^{-4} \left( \frac{L^3}{°C} \right)$, volume correction due to temperature variation (local variable)

$\rho_{F15} \left( \frac{lbf}{gal} \right)$, density of fuel at 15°C. (JP-8=6.69 ppg) (local variable)

$a = 7.48 \left( \frac{gal}{ft^3} \right)$, (local variable)

$$b = 1728\left(\frac{in^3}{ft^3}\right), \text{ (local variable)}$$

$$c = 32\left(\frac{ft}{s^2}\right), \text{ (local variable) and}$$

$$d = 3600\left(\frac{s}{hr}\right), \text{ (local variable)}.$$

18. A flow monitoring system comprising:

a plurality of sensors configured to generate a signals representative of a pressure of a fluid at a location upstream of a component, a pressure of the fluid at a location downstream of the component, and a temperature of the fluid at the component; and
a processor programmed to:

determine a value indicative of a density of the fluid at the component using the temperature; and

determine a value indicative of an equivalent resistance to flow at the component using the generated signals and the determined density.

19. A system in accordance with Clause 18, wherein said processor is further programmed to determine a quality index representing a quality of the received values and to indicate an invalid output when the quality index indicates at least one of the received values is invalid.

20. A system in accordance with Clause 18, wherein said processor is further programmed to determine at least one of a blockage of a flow path of the fluid when the determined equivalent resistance to flow value increases above a predetermined threshold and a failed component element when the determined equivalent resistance to flow value decreases below a predetermined threshold.

**Claims**

1. A flow monitoring system (138) comprising:

one or more sensors (146,148) configured to generate a signals representative of a pressure of a fluid at a location upstream of a component, a pressure of the fluid at a location downstream of the component;
a temperature of the fluid at the component; and
a measurement of the flow through the component and a processor (65) programmed to:

determine a value indicative of a density of the fluid at the component using the temperature;
determine a value indicative of an equivalent resistance to flow at the component using the generated signals and the determined density; and
output the determined equivalent resistance to flow value.

2. A system (138) in accordance with Claim 1, wherein said one or more sensors comprise at least one of a pressure sensor (146,148) configured to generate a signal representative of a pressure upstream of the component, a pressure sensor configured to generate a signal representative of a pressure downstream of the component, and a temperature sensor (144,150) configured to generate a signal representative of a temperature at the component.

3. A system (138) in accordance with Claim 1, wherein said one or more sensors (146,148) comprise at least one of a virtual sensor configured to generate a signal representative of a pressure upstream of the component, a virtual sensor configured to generate a signal representative of a pressure downstream of the component, and a virtual sensor configured to generate a signal representative of a temperature at the component.

4. A system (138) in accordance with any preceding Claim, wherein said processor (65) is further programmed to determine the value indicative of the equivalent resistance to flow using a ratio of the received upstream pressure and the received downstream pressure.

5. A system (138) in accordance with any preceding Claim, wherein said processor (65) is further programmed to determine a quality index representing a quality of the received values.

6. A system (138) in accordance with any preceding Claim, wherein said processor (65) is further programmed to indicate an invalid output when the quality index indicates at least one of the received values is invalid.

7. A system (138) in accordance with any preceding Claim, wherein said processor (65) is further programmed to determine a blockage of a flow path of the fluid when the determined equivalent resistance to flow value increases above a predetermined threshold.

8. A system (138) in accordance with any preceding Claim, wherein said processor (65) is further programmed to determine a failed component element when the determined equivalent resistance to flow value decreases below a predetermined threshold.

9. A flow monitoring system (138) comprising:

a plurality of sensors (146,148) configured to generate a signals representative of a pressure of a fluid at a location upstream of a component, a pressure of the fluid at a location downstream of the component, and a temperature of the fluid at the component; and
a processor (65) programmed to:

determine a value indicative of a density of the fluid at the component using the temperature; and
determine a value indicative of an equivalent resistance to flow at the component using the generated signals and the determined density.

10. A system (138) in accordance with Claim 9, wherein said processor (65) is further programmed to determine a quality index representing a quality of the received values and to indicate an invalid output when the quality index indicates at least one of the received values is invalid.

11. A method of monitoring component integrity comprising:

receiving a value indicative of a pressure of a fluid at a location upstream of a component;
receiving a value indicative of a pressure of the fluid at a location downstream of the component;
receiving a value indicative of a temperature of the fluid at the component;
determining a value indicative of a density of the fluid at the component using the temperature;
determining a value indicative of a flow of the fluid through the component;
determining a value indicative of an equivalent resistance to flow at the component using the received upstream pressure, the received downstream pressure, received flow through the component, and the determined density; and
outputting the determined equivalent resistance to flow value.

12. A method in accordance with Claim 11, wherein receiving a value comprises receiving a value indicative of at least one of pressure, flow and temperature that is directly measured by an associated sensor.

13. A method in accordance with either of Claim 11 or 12, wherein receiving a value comprises receiving a value indicative of at least one of pressure, flow and temperature that is inferred from other known values.

14. A method in accordance with any of Claims 11 to 13, wherein determining a value indicative of an equivalent resistance to flow comprises determining a value indicative of an equivalent resistance to flow using a ratio of the received upstream pressure and the received downstream pressure.

15. A method in accordance with any of Claims 11 to 14, further comprising determining a quality index representing a quality of the received values.

FIG. 1

FIG. 2

EP 2 469 368 A2